# FASCICULE DE BREVET EUROPEEN

(11) **EP 0 452 237 B1**
(45) Date de publication et mention de la délivrance du brevet: **20.09.1995**
(21) Numéro de dépôt: 91440026.2
(22) Date de dépôt: 03.04.1991
(51) Int. Cl.: A01B 63/00

(54) **Machine agricole avec dispositif de détection de la position intermédiaire du moyen de liaison**
Landwirtschaftliche Maschine mit einer Vorrichtung zur Ermittlung der Zwischenstellung des Verbindungsmittels
Farm machine which detects and intermediate position of a connecting device

(30) Priorité: 05.04.1990 FR 9004693
(43) Date de publication de la demande: 16.10.1991
(73) Titulaire: KUHN S.A., F-67700 Saverne (FR)
(72) Inventeur: Ermacora, Rino, F-67700 St. Jean Saverne (FR)

(56) Documents cités:
- EP-A- 178 239
- WO-A-88/09610
- FR-A- 2 226 101
- GB-A- 2 024 598
- US-A- 3 893 283
- US-A- 4 558 560

## Description

La présente invention concerne une machine agricole comportant un corps et un moyen de liaison à un véhicule moteur, lequel moyen de liaison est lié au corps par une articulation d'axe dirigé vers le haut et pouvant être amené dans deux positions extrêmes dont l'une est une position de travail et l'autre la position de transport, et dans une position intermédiaire qui est une autre position de travail, par pivotement autour dudit axe sous l'action d'un organe de manoeuvre, ladite machine agricole comportant en sus un dispositif de détection détectant la position intermédiaire de travail du moyen de liaison et stoppant l'action de l'organe de manoeuvre lorsque ledit moyen de liaison arrive de ladite position extrême de travail dans la position intermédiaire de travail, l'action dudit dispositif de détection pouvant être annulée, de sorte que l'organe de manoeuvre puisse amener le moyen de liaison au-delà de la position intermédiaire de travail dans la position de transport.

Il est connu dans l'état de la technique (US-A-4,558,560), une faucheuse comportant un corps qui s'étend au travail transversalement à la direction d'avance au travail. Le corps comporte notamment un châssis qui s'appuie sur le sol durant le travail au moyen de deux roues. Chaque roue est liée au châssis au moyen d'un bras de roue lui-même lié audit châssis au moyen d'une articulation du type pivot d'axe géométrique dirigé perpendiculairement à la direction d'avance au travail. Entre chaque bras de roue et le châssis est par ailleurs prévu un vérin hydraulique qui permet de faire pivoter le bras de roue et la roue correspondante par rapport au châssis autour de l'axe géométrique de l'articulation correspondante.

Cette faucheuse connue comporte par ailleurs un timon permettant son attelage à un tracteur. Le timon est lié au corps, dans la partie médiane de celui-ci, au moyen d'une articulation de type pivot d'axe géométrique vertical. La position angulaire du timon par rapport au corps peut être modifiée en faisant pivoter le timon autour dudit axe. La mise dans la position angulaire souhaitée est réalisée au moyen d'un vérin hydraulique de manoeuvre implanté entre le corps et le timon. Le corps de cette faucheuse connue comporte par ailleurs une plaque munie de deux butées servant à limiter le pivotement du timon. Cette plaque peut occuper deux positions par pivotement autour de l'axe géométrique de l'articulation liant le timon au corps : une position prévue pour le travail et une position prévue pour le transport. Dans chacune de ces positions, le pivotement de la plaque par rapport au corps est condamné à l'aide d'un dispositif de verrouillage à commande manuelle implanté dans le voisinage de l'articulation liant le timon au corps. Lesdites butées stoppent le pivotement du timon dès l'instant où ce dernier arrive en contact avec l'une d'entre elles sous l'action du vérin hydraulique de manoeuvre. C'est ainsi qu'en position de travail, une butée détermine la position du timon permettant de faucher à droite du tracteur et l'autre butée détermine la position de travail du timon permettant de faucher à gauche du tracteur.

En pivotant la plaque dans sa position de transport, la position relative des butées par rapport au corps est changée, ce qui permet au vérin hydraulique de manoeuvre de pivoter le timon dans la position de transport dans laquelle celui-ci s'étend approximativement parallèlement à la plus grande dimension du corps.

Il est du reste prévu de déposer la faucheuse sur un chariot de transport muni de roues de tranport, mais démuni de timon de traction car c'est le timon de la faucheuse qui est utilisé pour tracter l'ensemble faucheuse-chariot de transport.

Cette faucheuse connue comporte plusieurs inconvénients. Un premier inconvénient réside dans le fait que la pression dans le vérin hydraulique de manoeuvre doit être maintenue continuellement pour appliquer le timon sur la butée qui est opérationnelle. Un deuxième inconvénient réside dans le fait que l'utilisateur peut faire des fausses manoeuvres lors de la mise en position de transport. En effet, s'il met la plaque à butées en position de transport et actionne le vérin hydraulique de manoeuvre pour amener le timon en position de transport avant d'avoir déposé la faucheuse sur le chariot de transport, cette dernière se couchera sur le côté. Elle ne peut alors pratiquement plus être redressée. Mais elle risque surtout de renverser le tracteur.

Le troisième inconvénient enfin réside dans le fait que le transport de la faucheuse nécessite un chariot de transport. Ceci occasionne une perte de temps non négligeable lors de la mise en position de transport et vice-versa. Du reste, l'acquisition d'une telle faucheuse est très onéreuse.

Il est également connu dans l'état de la technique (EP-A-0 178 239), une faucheuse comportant un corps qui s'étend au travail transversalement à la direction d'avance au travail. Le corps comporte notamment un châssis qui s'appuie sur le sol durant le travail au moyen de deux roues de travail s'étendant chacune près d'une extrémité extérieure respective dudit châssis. Chaque roue de travail est liée au châssis au moyen d'un bras de roue lui-même lié audit chassis au moyen d'une articulation du type pivot d'axe géométrique dirigé perpendiculairement à la direction d'avance au travail. Entre chaque bras de roue et le châssis est par ailleurs prévu un premier vérin hydraulique qui permet de faire pivoter le bras de roue et la roue de travail correspondante par rapport au châssis autour de l'axe géométrique de l'articulation correspondante.

Au transport, lorsque l'axe longitudinal du corps s'étend parallèlement à la direction de transport, le châssis s'appuie sur le sol au moyen de deux roues de transport qui s'étendent de part et d'autre dudit corps et dans la partie médiane de celui-ci. Chaque roue de transport est liée au châssis au moyen d'un bras de roue lui-même lié audit châssis au moyen d'une articulation de type pivot d'axe géométrique dirigé perpendiculairement à la direction d'avance au travail. Entre les deux bras de roue est, par ailleurs, prévu un deuxième vérin hydraulique qui permet de faire pivoter les bras de roue et les roues de transport autour des axes géométriques des articulations correspondantes.

Un timon qui permet d'atteler la faucheuse à un tracteur, est lié au corps dans la partie médiane de celui-ci au moyen d'une articulation de type pivot d'axe géométrique au moins sensiblement vertical. La position angulaire du timon par rapport au corps peut être modifiée en faisant pivoter le timon autour dudit axe. La mise dans la position angulaire souhaitée et le maintien dans celle-ci sont réalisés par un troisième vérin hydraulique articulé d'une part au corps et d'autre part au timon.

Pour l'amener d'une position de travail dans laquelle l'axe longitudinal de son corps s'étend transversalement à la direction d'avance au travail, dans une position de transport dans laquelle l'axe longitudinal de son corps s'étend parallèlement à la direction de transport, cette faucheuse connue utilise le procédé de transformation suivant :
- les deux premiers vérins lèvent le corps de la machine qui s'appuie sur les deux roues de travail, pour l'amener dans une position éloignée du sol;
- le deuxième vérin met en place les deux roues de transport, différentes des roues de travail, qui s'étendent de part et d'autre du corps de la machine et qui tournent chacune dans un plan respectif sensiblement vertical et parallèle à l'axe longitudinal du corps de la machine;
- les deux premiers vérins lèvent les deux roues de travail, de sorte à faire reposer le corps de la machine uniquement sur les deux roues de transport; et
- le troisième vérin fait pivoter le timon d'attelage par rapport au corps de la machine d'une position de travail dans la position de transport.

La présente invention a pour but de résoudre les différents problèmes existant dans la machine agricole connue par le document US-A-4,558,560.

A cet effet, la machine agricole selon la présente invention est caractérisée par le fait que :
a) le dispositif de détection coupe l'alimentation de l'organe de manoeuvre lorsque ledit moyen de liaison arrive de la position extrême de travail dans la position intermédiaire de travail;
b) la machine agricole comporte, d'une manière connue en soi, des roues de transport pouvant être amenées d'une position escamotée dans une position de transport;
c) l'action dudit dispositif de détection est annulée automatiquement durant la phase de descente des roues de transport.

Dans la machine agricole selon la présente invention, on coupe l'alimentation de l'organe de manoeuvre. Le moyen de liaison n'est donc pas appliqué fortement contre une butée, mais est maintenu dans sa position opérationnelle par l'organe de manoeuvre qui, faute d'alimentation, conserve la position atteinte.

La machine agricole selon l'invention ne nécessite ensuite aucun chariot de transport puisqu'elle est équipée de roues de transport qui y sont montées à demeure et qui peuvent être amenées d'une position escamotée dans la position de transport.

Il n'y a enfin aucun risque de fausse manoeuvre puisque le moyen de liaison ne peut pas être pivoté au-delà de la position intermédiaire de travail, tant que les roues de transport ne sont pas en position de transport.

Afin de faciliter le montage et le branchement du dispositif de détection, il est prévu, selon une caractéristique supplémentaire de l'invention, que ledit dispositif de détection soit lié au corps de la machine agricole.

Pour que l'organe de manoeuvre puisse amener le moyen de liaison au- delà de la position intermédiaire de travail dans la position de transport, l'action du dispositif de détection doit, comme dit ci-devant, être annulée. Dans ce but, il est prévu, dans une réalisation, que le dispositif de détection soit lié au corps de la machine au moyen d'une articulation. Ledit dispositif de détection peut ainsi être escamoté par pivotement autour de ladite articulation.

Selon une autre caractéristique de l'invention, il est prévu un moyen d'escamotage destiné à escamoter le dispositif de détection et pouvant être actionné à partir du véhicule moteur. Ce moyen d'escamotage est implanté préférentiellement sur le dispositif de détection.

Dans une réalisation, ledit moyen d'escamotage comporte au moins un vérin. Une solution particulièrement intéressante est obtenue lorsque le moyen d'escamotage comporte deux vérins plongeurs qui s'étendent au moins sensiblement sans jeu entre deux butées solidaires du corps de la machine. De cette manière, il est possible, en alimentant l'un desdits vérins plongeurs, de placer le dispositif de détection en position opérationnelle et, en alimentant l'autre vérin plongeur, de placer le dispositif de détection en position escamotée.

Selon une caractéristique supplémentaire de l'invention, il est prévu qu'un organe élastique contribue, au moins partiellement, à maintenir le dispositif de détection en position opérationnelle. Au cas où le moyen d'escamotage comporte un vérin, un électro-aimant, etc., destiné à placer et à maintenir le dispositif de détection en position opérationnelle, celui-ci peut être assisté dudit organe élastique qui contribue à maintenir le dispositif de détection en position opérationnelle.

Il est également possible dans l'invention, que cet organe élastique ait comme double fonction la mise en position opérationnelle et le maintien du dispositif de détection dans celle-ci.

Selon une caractéristique supplémentaire de l'invention, le dispositif de détection comporte en sus un organe de commande pouvant occuper deux positions : une première position dans laquelle l'alimentation de l'organe de manoeuvre est établie et une deuxième position dans laquelle l'alimentation de l'organe de manoeuvre est coupée.

Lorsque l'organe de manoeuvre est alimenté, le moyen de liaison tourne par rapport au corps de la machine jusqu'à la position intermédiaire de travail. En arrivant dans cette position, le passage de l'organe de commande de la première position à la deuxième position est réalisé par une came agissant sur ledit organe de commande. Cette action coupe l'alimentation de l'organe de manoeuvre et immobilise le moyen de liaison dans la position atteinte.

Cette came pourra être liée directement ou indirectement au moyen de liaison. Il pourra, en particulier, être prévu que la partie de l'organe de manoeuvre liée au moyen de liaison soit munie de la came. Avantageusement, l'organe de manoeuvre est un vérin et préférentiellement, la came est solidaire de ce verin.

Selon une caractéristique supplémentaire de l'invention, il est prévu que l'organe de commande commande un distributeur implanté sur le dispositif de détection. Ce distributeur pourra avantageusement être un distributeur du type 2/2 muni en parallèle d'un clapet anti-retour.

Le vérin de manoeuvre, commandé par ledit distributeur 2/2, est monté en série avec celui-ci dans un même circuit. Ce circuit ainsi constitué et le circuit du (des) vérin(s) du moyen d'escamotage précédemment défini sont alimentés par un circuit commun. Un inverseur monté sur ledit circuit commun permet d'alimenter soit le circuit du vérin de manoeuvre, soit le circuit du (des) vérin(s) du moyen d'escamotage du dispositif de détection.

Pour que l'organe de manoeuvre puisse amener le moyen de liaison au- delà de la position intermédiaire de travail dans la position de transport, l'action du dispositif de détection doit, comme dit ci-avant, être annulée. Dans ce but, il est prévu, dans une autre forme de réalisation, un autre distributeur de type 2/2 dont l'ouverture et la fermeture sont commandées par un organe de commande, et qui est branché en parallèle avec le distributeur 2/2 du dispositif de détection. Il pourra être avantageusement prévu que l'une au moins des roues de transport agisse directement ou indirectement sur l'organe de commande pour commander l'ouverture de cet autre distributeur lorsqu'elle est amenée en position de transport.

Dans cette forme de réalisation, le vérin de manoeuvre du moyen de liaison, commandé par le distributeur 2/2 du dispositif de détection, est également monté en série avec cet autre distributeur dans un même circuit. Ce circuit ainsi constitué et le circuit de manoeuvre des roues servant au transport (au cas où le déplacement des roues de transport est opéré par un (des) vérin(s) de manoeuvre) sont alimentés par un circuit commun. Un inverseur monté sur ledit circuit commun permet d'alimenter soit le circuit du vérin de manoeuvre du moyen de liaison, soit le circuit du (des) vérin(s) de manoeuvre des roues de transport.

L'inverseur prévu dans la première forme de réalisation décrite ou dans la deuxième forme de réalisation décrite pourra être avantageusement commandé à partir du véhicule moteur par un organe de commande.

Dans une réalisation particulièrement intéressante, l'inverseur est un inverseur à levier pivotant collaborant avec ledit organe de commande. Cet organe de commande pourra être constitué d'un organe de traction lié au levier pivotant dudit inverseur et manoeuvrable depuis le véhicule moteur.

Selon une caractéristique supplémentaire de l'invention, les roues servant au transport sont amenées dans leur position de transport et dans leur position escamotée par au moins un élément de manoeuvre actionné à partir du véhicule moteur.

Dans une réalisation avantageuse, les éléments de manoeuvre peuvent être des vérins permettant d'amener les roues servant au transport de leur position escamotée dans leur position de transport et inversement. En particulier, un élément de manoeuvre ou un vérin peut être associé à chaque roue servant au transport.

Lorsque les éléments de manoeuvre des roues servant au transport sont des vérins, il peut être prévu que le circuit desdits vérins de manoeuvre comporte au moins un diviseur de débit. Ce (ces) diviseur(s) de débit alimente(nt) alors lesdits vérins de manoeuvre avec le même débit permettant ainsi de mettre simultanément toutes les roues servant au transport soit dans leur position de transport, soit dans leur position escamotée.

Selon une caractéristique particulièrement intéressante de l'invention, le circuit du (des) vérin(s) du moyen d'escamotage et le circuit du (des) vérin(s) de manoeuvre des roues servant au transport sont couplés en parallèle. Cet agencement permet la combinaison de l'escamotage du dispositif de détection du moyen de liaison et la mise dans la position de transport des roues servant au transport.

Selon une caractéristique supplémentaire de l'invention, l'articulation liant le moyen de liaison au corps de la machine agricole pourra s'étendre, en vue de dessus, dans la partie médiane dudit corps considéré transversalement à la direction d'avance au travail. De cette façon, les deux positions de travail dudit moyen de liaison pourront être au moins sensiblement symétriques par rapport à un plan vertical dirigé suivant la direction d'avance au travail et passant par l'axe de l'articulation liant le moyen de liaison au corps.

La machine agricole de l'invention pourra être une machine de récolte, en particulier une faucheuse avec ou sans organes de traitement du produit coupé.

D'autres caractéristiques de l'invention apparaissent dans la description suivante de deux exemples non limitatifs de réalisation de l'invention, faite en référence au dessin annexé sur lequel :
- la figure 1 représente une vue de dessus d'une machine agricole selon l'invention attelée à un tracteur agricole et travaillant à gauche de celui-ci;
- la figure 2 représente une vue latérale du corps de ladite machine en position de travail;
- la figure 3 représente une vue du dispositif de détection escamotable ;
- la figure 4 représente une vue du dispositif de détection suivant la flèche IV définie sur la figure 3 ;
- la figure 5 représente une coupe du dispositif de détection suivant le plan V-V de la figure 3 ;
- la figure 6 représente une coupe du dispositif de détection suivant le plan VI-VI de la figure 3 ;
- la figure 7 représente une vue du dispositif de détection escamoté ;
- la figure 8 représente une vue de dessus de la machine agricole travaillant à droite du tracteur agricole ;
- la figure 9 représente le schéma hydraulique de la machine lorsque celle-ci travaille à droite du tracteur agricole ;
- la figure 10 représente une vue latérale de la machine agricole avec le châssis en position haute ;
- la figure 11 représente le schéma hydraulique de la machine agricole avec le châssis en position haute ;
- la figure 12 représente une vue latérale de la machine agricole avec les roues de transport descendues ;
- la figure 13 représente le schéma hydraulique de la machine agricole avec les roues de transport descendues ;
- la figure 14 représente une vue latérale de la machine agricole reposant sur les roues de transport ;
- la figure 15 représente le schéma hydraulique de la machine agricole reposant sur les roues de transport ;
- la figure 16 représente une vue de dessus de la machine agricole en position de transport ;
- la figure 17 représente le schéma hydraulique de la machine agricole en position de transport ;
- la figure 18 représente un autre exemple de réalisation du dispositif de détection de la machine agricole ; et
- la figure 19 représente le schéma hydraulique de cet autre exemple de réalisation du dispositif de détection de la machine agricole.

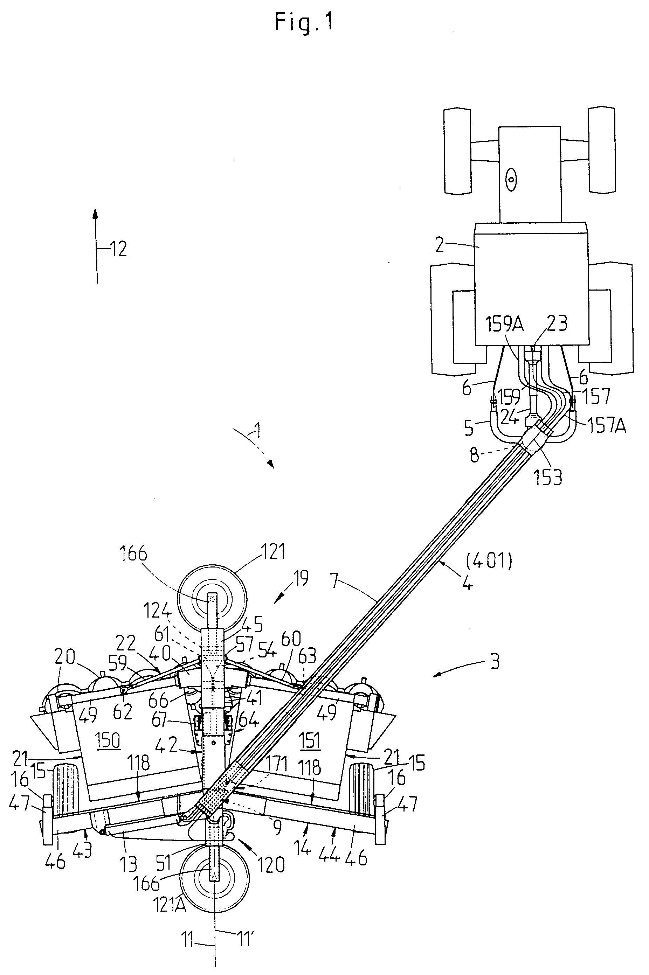

La figure 1 montre une faucheuse (1) selon l'invention. Celle-ci est attelée à un tracteur agricole (2).

Dans la suite de la description, les notions suivantes "avant" et "arrière" sont définies par rapport au sens d'avance (12) de la faucheuse (1) lors du fauchage, et les notions "droite" et "gauche" sont définies en regardant la faucheuse (1) de l'arrière, dans le sens d'avance (12) au fauchage.

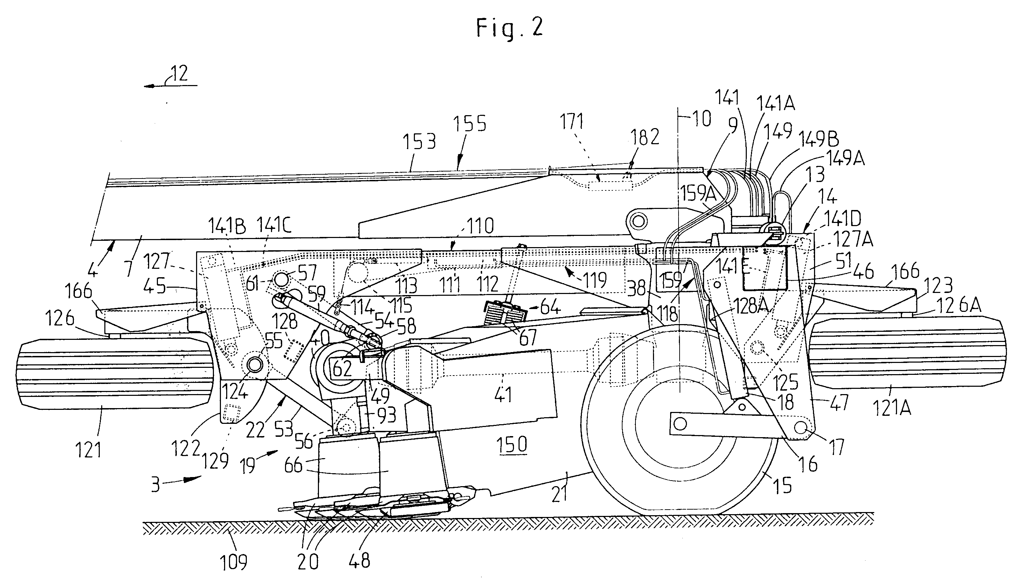

Elle se compose d'un corps (3) et d'un timon (4). Le timon (4), quant à lui, se compose d'un timon primaire (5) destiné à être attelé aux bras inférieurs (6) de l'attelage du tracteur agricole (2) et d'un timon secondaire (7) lié au corps (3) de la faucheuse (1). Le timon primaire (5) est lié à l'extrémité frontale du timon secondaire (7) au moyen d'un dispositif de liaison (8) connu de l'homme de l'art et qui autorise notamment un pivotement du timon primaire (5) par rapport au timon secondaire (7) autour d'un axe au moins sensiblement vertical. Près de son extrémité arrière, le timon secondaire (7) est lié au corps (3) au moyen d'une articulation (9) d'axe géométrique (10) (voir figure 2) au moins sensiblement vertical et s'étendant au moins sensiblement dans le plan vertical médian (11) du corps (3), dirigé suivant la direction d'avance (12) au travail. La position angulaire du timon (4) par rapport au corps (3) peut être modifiée en faisant pivoter le timon (4) autour de l'axe (10) de l'articulation (9). La mise dans la position angulaire souhaitée et le maintien dans celle-ci sont réalisés par un vérin de manoeuvre (13) associé à un dispositif de détection (120). Grâce à cet agencement, le corps (3) de la faucheuse (1) peut, au travail, s'étendre - vu de l'arrière dans la direction d'avance (12) au travail - soit à droite (402), soit à gauche (401) du tracteur agricole (2). Ceci autorise le fauchage en aller et retour.

Le corps (3) de la faucheuse (1) comporte un châssis (14) qui s'appuie sur le sol - au travail - au moyen de deux roues de travail (15) qui s'étendent chacune près d'une extrémité extérieure respective dudit châssis (14). Chaque roue de travail (15) est liée au châssis (14) au moyen d'un bras de roue (16) lui-même lié audit châssis (14) au moyen d'une articulation du type pivot (17) d'axe géométrique dirigé au moins sensiblement perpendiculairement à la direction d'avance (12) au travail. Les axes géométriques des articulattions (17) des deux roues de travail (15) sont au moins sensiblement confondus. Entre chaque bras de roue (16) et le châssis (14) est par ailleurs prévu un vérin hydraulique (18) qui permet de faire pivoter le bras de roue (16) et la roue de travail (15) correspondante par rapport au châssis (14) autour de l'axe géométrique de l'articulation (17) correspondante. Ceci permet au châssis (14) d'être approché du sol (109) pendant la phase de fauchage et d'être éloigné du sol (109) lorsque le fauchage est interrompu.

Sur la figure 1 apparaît également très précisément la forme du châssis (14). Celui-ci se compose pour l'essentiel d'un élément médian (42) et de deux éléments latéraux (43, 44) s'étendant chacun d'un côté respectif dudit élément médian (42). L'élément médian (42) se compose principalement d'un palier (38) et deux consoles (45, 51) qui s'étendent au moins sensiblement horizontalement et au moins sensiblement suivant la direction d'avance (12) au travail. Ces deux consoles - une console avant (45) et une console arrière (51) - sont liées rigidement, mais néanmoins de manière amovible, a l'avant, respectivement à l'arrière du palier (38). Les éléments latéraux (43, 44), quant à eux, sont chacun constitués par une poutre (46) s'étendant au moins sensiblement horizontalement et transversalement à la direction d'avance (12) au travail, et à l'extrémité extérieure de laquelle, c'est-à-dire l'extrémité éloignée du palier (38), est fixée une jambe (47) s'étendant vers le bas. C'est à l'extrémité inférieure de cette jambe (47) qu'est lié le bras de roue (16) de la roue de travail (15) correspondante. Chaque élément latéral (43, 44) est également lié rigidement et de manière amovible au palier (38).

Sur les figures 1 et 2, il apparaît par ailleurs que la faucheuse (1) comporte un mécanisme de récolte (19) qui s'étend sous la console avant (45) de l'élément médian (42) du châssis (14) et transversalement à la direction d'avance (12) au travail. Ce mécanisme de récolte (19) se compose pour l'essentiel d'une barre de coupe (48) supportant des organes de coupe (20), d'un carter d'entrée (40) et de deux structures porteuses (49) supportant notamment des organes de traitement (21). Le carter d'entrée (40) se situe plus précisément sous la console avant (45) et dans le plan vertical médian (11') du mécanisme de récolte (19) dirigé suivant la direction d'avance (12) au travail. Dans l'exemple représenté, ledit plan vertical médian (11') est confondu avec le plan vertical (11) du corps (3). De part et d'autre de ce carter d'entrée (40) sont liées de façon amovible les deux structures porteuses (49) agencées symétriquement par rapport audit plan médian (11'). Ces structures porteuses (49) s'étendent sensiblement horizontalement et approximativement parallèlement aux éléments latéraux (43, 44) du châssis (14). Les organes de traitement (21) sont répartis suivant deux groupes (150, 151) d'organes de traitement (21), chacun fixé à une structure porteuse (49) respective du mécanisme de récolte (19). Ils s'étendent derrière les organes de coupe (20) en vue du traitement du produit coupé par ces derniers. Les deux groupes d'organes de traitement (150, 151) sont, comme les structures porteuses (49), agencés symétriquement par rapport au plan médian (11') du mécanisme de récolte (19).

Un dispositif de suspension (22), comportant notamment deux organes de suspension (53, 54), lie le mécanisme de récolte (19) au châssis (14). Le premier organe de suspension (53) est articulé par deux liaisons rotule (55, 56) d'une part à la console avant (45) du châssis (14) et d'autre part à une traverse (93) du mécanisme de récolte (19). Le deuxième organe de suspension (54) situé au-dessus du premier organe de suspension (53), s'articule à la console avant (45) du châssis (14) par une liaison pivot (57), ainsi qu'au carter d'entrée (40) du mécanisme de récolte (19) par une liaison rotule (58). Ces deux organes de suspension (53, 54) forment un parallélogramme déformable, sensiblement vertical, permettant une bonne adaptation du mécanisme de récolte (19) au sol (109). Ce dispositif de suspension (22) comporte également deux organes de suspension latéraux (59, 60). Chaque organe de suspension latéral (59, 60) est articulé par une liaison rotule (61) à la console avant (45) du châssis (14) et par une autre liaison rotule (62, 63) à la structure porteuse (49) respective du mécanisme de récolte (19). Ces deux organes de suspension latéraux (59, 60) sont agencés symétriquement de part et d'autre de la console avant (45) de façon à empêcher le pivotement du mécanisme de récolte (19) autour d'une droite passant par les centres des deux liaisons rotule (56, 58) des organes de suspension (53, 54). De ce fait, le dispositif de suspension (22) autorise uniquement un déplacement du mécanisme de récolte (19) suivant une direction dirigée vers le haut, ainsi qu'une inclinaison dudit mécanisme de récolte (19) par rapport au châssis (14) transversalement à la direction d'avance (12) au travail.

Un dispositif d'allègement (64) dont la structure apparaît sur les figures 1 et 2, collabore avec le dispositif de suspension (22). Ce dispositif d'allègement (64) comporte un groupe de quatre ressorts de traction (67) situé dans le voisinage du plan vertical dirigé suivant la direction d'avance (12) au travail et contenant le centre des masses du mécanisme de récolte (19). On voit également que ledit dispositif d'allègement (64) s'étend entre les deux groupes (150, 151) d'organes de traitement (21) et juste derrière deux rotors (66) s'étendant l'un près de l'autre dans la partie médiane de la barre de coupe (48).

L'entraînement du mécanisme de récolte (19) est réalisé à partir de la prise de force (23) du tracteur (2), qui attaque, par l'intermédiaire d'un arbre télescopique à joints universels (24) une chaîne cinématique connue de l'homme de l'art et qui aboutit au carter d'entrée (40) du mécanisme de récolte (19) par l'intermédiaire d'un autre arbre télescopique à joints universels (41).

Tel que visible sur la figure 2, la faucheuse (1) comporte encore un dispositif de relevage (110) du mécanisme de récolte (19). Ce dispositif se compose principalement d'un vérin hydraulique (111) dont le cylindre (112) est lié au châssis (14) et dont la tige (113) est liée a une chaîne (114). Cette chaîne (114) s'enroule partiellement sur une roue (115) guidée en rotation dans le châssis (14), et est liée à son extrémité éloignée du vérin hydraulique (111) au deuxième organe de suspension (54). Au travail, ce dispositif de relevage (110) ne gêne pas le déplacement du mécanisme de récolte (19) par rapport au châssis (14). Lorsque le mécanisme de récolte (19) doit être relevé, il suffira de faire rentrer la tige (113) dans le cylindre (112) du vérin hydraulique (111) en injectant du fluide dans celui-ci. Ce faisant, la tige (113) tire, via la chaîne (114), sur le deuxième organe de suspension (54), ce qui a pour effet de faire monter le mécanisme de récolte (19) par déformation du parallélogramme déformable.

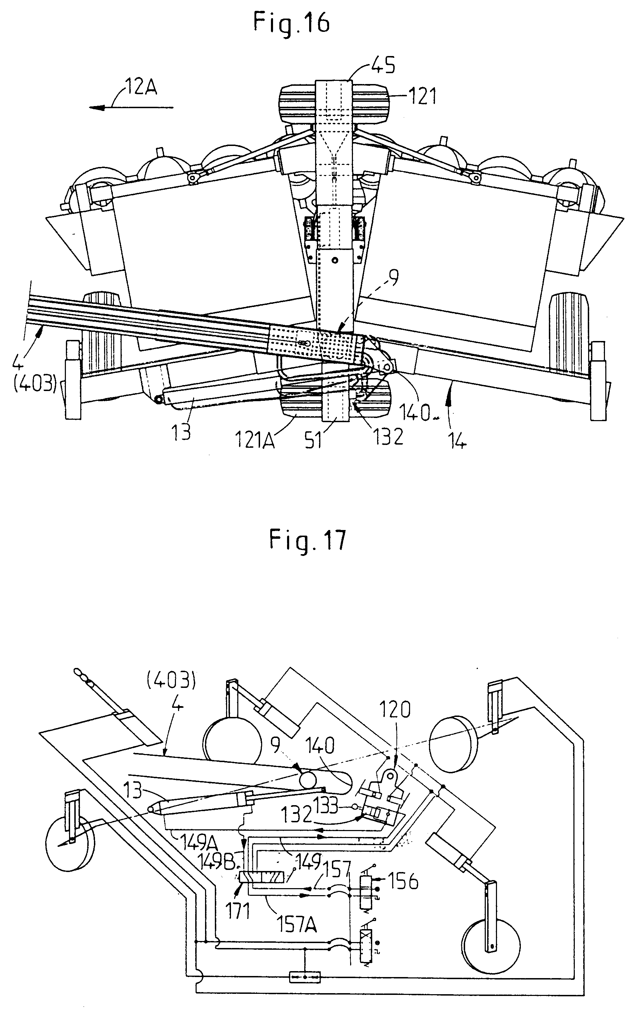

Sur la figure 2, il apparaît également que la faucheuse (1) comporte deux roues de transport (121, 121 A) dont l'une (121) est liée à l'extrémité libre de la console avant (45) et dont l'autre (121 A) est liée à la console arrière (51). Du reste, ces roues de transport (121, 121 A) s'étendent dans le plan médian (11) du corps (3). Chaque roue de transport (121, 121 A) est liée à un bras de roue (122, 123) correspondant, lui-même lié audit châssis (14) au moyen d'une articulation de type pivot (124, 125) d'axe géométrique dirigé au moins sensiblement perpendiculairement à la direction d'avance (12) au travail. Les axes géométriques des fusées (126, 126 A) des deux roues de transport (121, 121 A) sont, pendant la phase de travail, au moins sensiblement verticaux. Entre chaque bras de roue (122, 123) et le châssis (14) est par ailleurs prévu un vérin hydraulique (127, 127 A) correspondant, qui permet de faire pivoter le bras de roue (122, 123) et la roue (121, 121 A) respective par rapport au châssis (14) autour de l'axe géométrique de l'articulation (124, 125) correspondante. Ceci permet pendant la phase de fauchage (figures 1, 2 et 8) d'escamoter les roues de transport (121, 121 A) en les montant et de les descendre en vue du transport (figure 16). Un protecteur (166) respectif, articulé à la console (45, 51) correspondante, empêche l'entrée de corps étrangers dans lesdites consoles (45, 51).

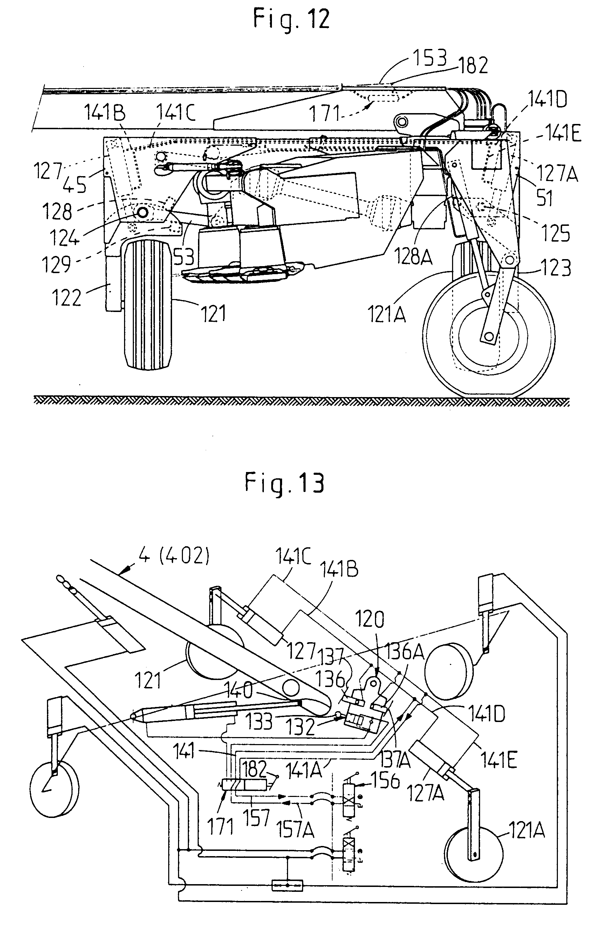

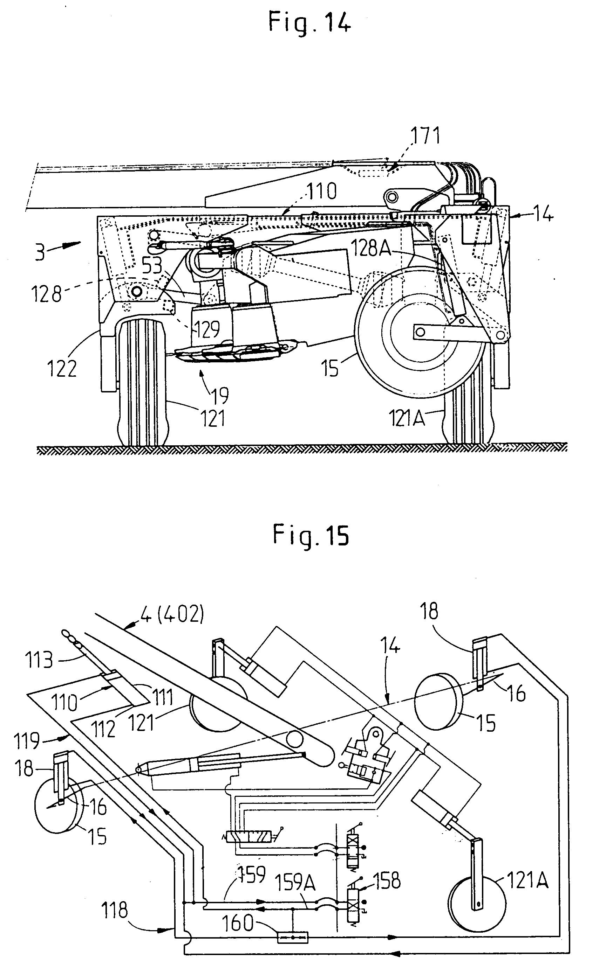

Lors du transport (figure 16), ces deux roues de transport (121, 121 A) roulent respectivement sous la console avant (45) et sous la console arrière (51) du châssis (14). Pour positionner plus précisément les roues de transport (121, 121 A) en position de transport, les deux consoles (45, 51) sont équipées chacune d'une butée (128, 128 A) contre laquelle le bras de roue (122, 123) s'appuie en bout de course, lors de la descente de la roue de transport (121, 121 A) respective (figures 12 et 14). En sus, l'axe géométrique de l'articulation (124), du type pivot, liant le bras de roue (122) de la roue de transport avant (121) à la console (45), passe par le centre de la liaison rotule (55) du premier organe de supension (53). Cet agencement permet d'obtenir un encombrement réduit de la console avant (45). Une autre particularité du bras de roue (122) de la roue de transport avant (121) résulte de la butée de maintien (129) destinée, lors du transport, à soutenir, par l'intermédiaire du premier organe de suspension (53), le mécanisme récolte (19) en positon haute (figures 12 et 14).

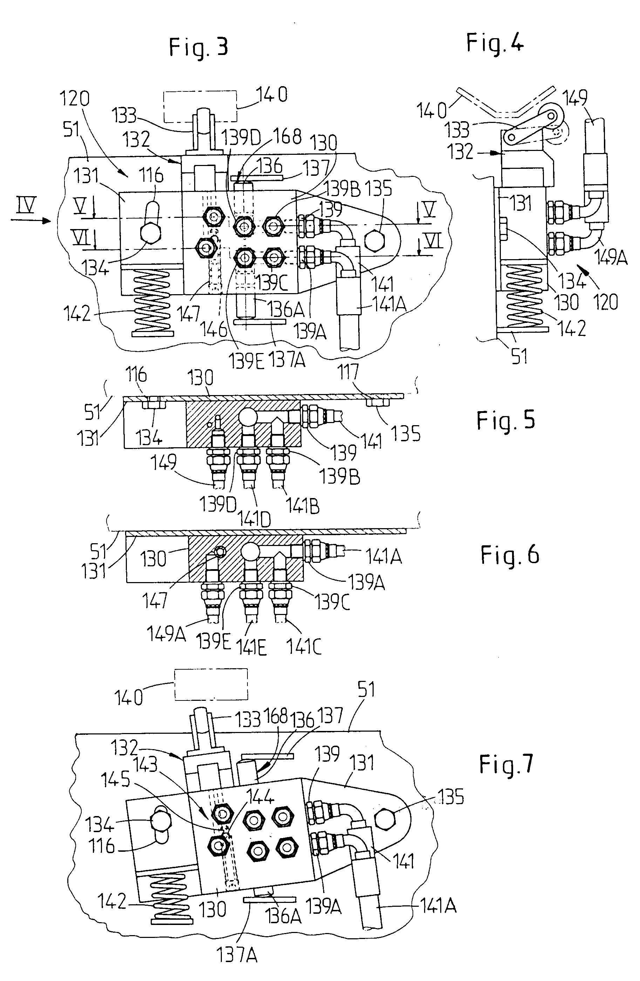

Sur les figures 3 à 7, apparaît en détail le dispositif de détection (120) lié au flanc extérieur droit de la console arrière (51) du châssis (14). Ce dispositif de détection (120) comporte un corps (130) lié rigidement à une tôle de support (131) et muni d'un distributeur (132) de type 2/2 commandé par un organe de commande (133) de type levier de commande. Deux trous, l'un (116) oblong et l'autre (117) circulaire, prévus dans la tôle de support (131), sont traversés chacun par un bouton (134, 135) respectif vissé dans la console arrière (51). Ainsi fixé à la console arrière du châssis (14), le dispositif de détection (120) peut pivoter autour de l'axe du bouton (135) traversant le trou circulaire (117) sous l'action d'un moyen d'escamotage (168) à deux vérins (136, 136 A). Ces vérins (136, 136 A) s'étendent l'un dans le prolongement de l'autre et leurs pistons sortent chacun d'une face respective du corps (130), de sorte à s'étendre au moins sensiblement sans jeu entre deux butées (137, 137 A) liées rigidement à la console arrière (51). L'extrémité extérieure du piston de chaque vérin (136, 136 A) est avantageusement bombée et appuie sur la butée (137, 137 A) respective, sous l'effet de la pression hydraulique s'exerçant sur son autre extrémité logée à l'intérieur du corps (130) lorsque ledit vérin (136, 136 A) est opérationnel. L'huile est amenée aux vérins (136, 136 A) par deux conduites (141, 141 A) raccordées à des embouts (139, 139 A) vissés dans le corps (130), dont l'un (139) alimente le vérin (136) et l'autre (139 A) le vérin (136 A). Cet agencement permet, grâce à l'action de l'huile sous pression sur l'un (136) des vérins (136, 136 A), d'annuler l'action du dispositif de détection (120) en le faisant tourner de quelques degrés autour du premier boulon (135) (figure 7).

Sur les figures 2 à 7 notamment, il apparaît que l'huile du circuit des vérins (136, 136 A) du moyen d'escamotage (168), amenée par la paire de conduites (141, 141 A), est communiquée en parallèle à deux autres paires de conduites (141 B, 141 C, 141 D, 141 E) indentiques dont la première (141 B, 141 C) alimente le vérin (127) associé à la roue de transport avant (121) et la seconde (141 D, 141 E) le vérin (127 A) de la roue de transport arrière (121 A). La descente des roues de transport (121, 121 A) s'opère ainsi au moins sensiblement simultanément avec l'escamotage du dispositif de détection (120).

Un ressort (142), disposé entre la console arrière (51) et la tôle de support (131), maintient le dispositif de détection (120) en position non escamotée. Ainsi, les légères fuites inévitables dans les circuits peu utilisés et le poids du dispositif de détection (120) ne peuvent pas provoquer l'escamotage de ce dernier.

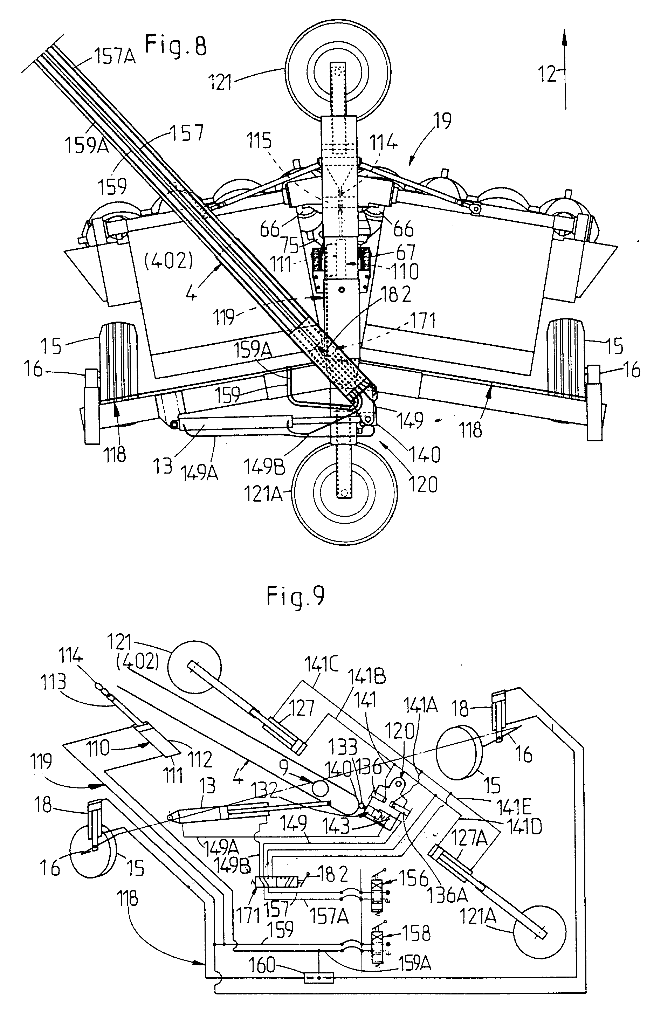

Le distributeur (132) muni en parallèle d'un clapet anti-retour (143) est alimenté par une conduite (149) et est couplé avec la grande chambre du vérin de manoeuvre (13) du timon (4) au moyen d'une conduite (149 A). La petite chambre dudit vérin (13) quant à elle, est alimentée par une autre conduite (149 B) (figures 9 et 17). Lorsque le dispositif de détection (120) est en position non escamotée, le distributeur (132) peut être commandé par l'intermédiaire d'une came (140) agissant sur le levier de commande (133), et qui est implantée directement ou indirectement sur le timon (4) (dans l'exemple réalisé, cette came (140) est liée à l'extrémité de la tige du vérin (13)). Ainsi, dès que le timon (4) arrive au-dessus du distributeur (132), la came (140) appuie sur le levier de commande (133) qui ferme ledit distributeur (132). Par contre, lorsque l'action du dispositif de détection (120) est annulée, c'est-à-dire lorsqu'il est escamoté, la came (140) ne peut plus atteindre le levier de commande (133) et le distributeur (132) reste passant. Le clapet anti-retour (143) monté en parallèle avec le distributeur (132), comporte une bille (144) et un ressort (145) qui collaborent avec une vis (146) et un tube (147) percé de trous nécessaires à la mise en place et au bon fonctionnement dudit clapet (143).

Sur les figures 1, 2, 8, 12 et 14 notamment on voit que près de l'articulation (9) du timon (4) est agencé en sus un inverseur (171) connue de l'homme de l'art. Cet inverseur (171) est un inverseur à levier pivotant (182), lequel levier pivotant (182) peut être actionné à partir du tracteur (2) au moyen d'un organe de commande (155) réalisé sous forme de cordelette (153). Cet inverseur (171) est alimenté en huile par une paire de conduites (157, 157 A) supportées par le timon (4) et branchées sur un premier distributeur (156) du type 4/3, appartenant au tracteur (2). Si le levier pivotant (182) de l'inverseur (171) n'est pas actionné, l'huile est distribuée par l'inverseur (171) au circuit du vérin de manoeuvre (13) du timon (4) (figures 9, 11, 15 et 17).

Si au contraire, le levier pivotant (182) est actionné à l'aide de l'organe de commande (155), l'huile est distribuée par l'inverseur (171) aux circuits des vérins (136, 136 A) du dispositif de détection (120) et des vérins (127, 127 A) des roues de transport (121, 121 A) qui sont comme dit ci-avant, couplés en parallèle (figure 13). Un deuxième distributeur (158) du type 4/3 du tracteur (2) alimente par l'intermédiaire d'une paire de conduites (159, 159 A) d'une part le circuit (118) des deux vérins (18) des roues de travail (15) et d'autre part le circuit (119) du vérin (111) du dispositif de relevage (110). Pour garder le châssis (14) sensiblement parallèle au sol (109), lors du déplacement en hauteur de celui-ci, un diviseur de débit (160) équipe le circuit (118) des vérin (18) des roues de transport (15).

La figure 1 montre la faucheuse (1) avec le timon (4) dans la position extrême (401) de travail permettant au mécanisme de récolte (19) de travailler à gauche du tracteur (2). Pour passer de cette position (401) à la position de travail (402) à droite du tracteur (2) (figures 8 et 9), l'utilisateur commande, par l'intermédiaire du premier distributeur (156) du tracteur (2), la sortie de la tige du vérin (13) qui provoque le pivotement du timon (4) de la droite vers la gauche autour de l'axe géométrique (10) de l'articulation (9). Pour ce faire, le distributeur (156) est actionné de telle sorte que le tracteur (2) alimente la grande chambre du vérin (13) au travers de la conduite (157), de l'inverseur (171), de la conduite (149), du distributeur (132) qui est ouvert, et de la conduite (149 A). L'huile contenue dans la petite chambre du vérin (13), quant à elle, retourne au tracteur (2) au travers de la conduite (149 B), de l'inverseur (171) et de la conduite (157 A). Lorsque le timon (4) arrive dans la position intermédiaire (402) de travail, la came (140) actionne le levier de commande (133) du distributeur (132), provoquant la coupure de l'alimentation du vérin (13) et de ce fait l'immobilisation du timon (4) par rapport au corps (3) de la faucheuse (1).

Pour ensuite repasser de la position intermédiaire (402) de travail (corps (3) de la faucheuse (1) à droite du tracteur (2)) à la position extrême (401) de travail (corps (3) de la faucheuse (1) à gauche du tracteur (2)), il suffit de commander par l'intermédiaire du premier distributeur (156) la rentrée de la tige du vérin (13) de sorte à provoquer le pivotement du timon (4) de la gauche vers la droite autour de l'axe géométrique (10) de l'articulation (9). Pour ce faire, on actionne à nouveau le distributeur (156) d'une manière telle que le tracteur (2) alimente la petite chambre du vérin (13) au travers de la conduite (157 A), de l'inverseur (171) et de la conduite (149 B). L'huile contenue dans la grande chambre du vérin (13), quant à elle, retourne au tracteur (2) au travers de la conduite (149 A), du clapet (143) qui est passant dans ce sens, de la conduite (149), de l'inverseur (171) et de la conduite (157). La position extrême (401) de travail est atteinte lorsque, par exemple, la tige du vérin (13) est rentrée au maximum dans le corps dudit vérin (13).

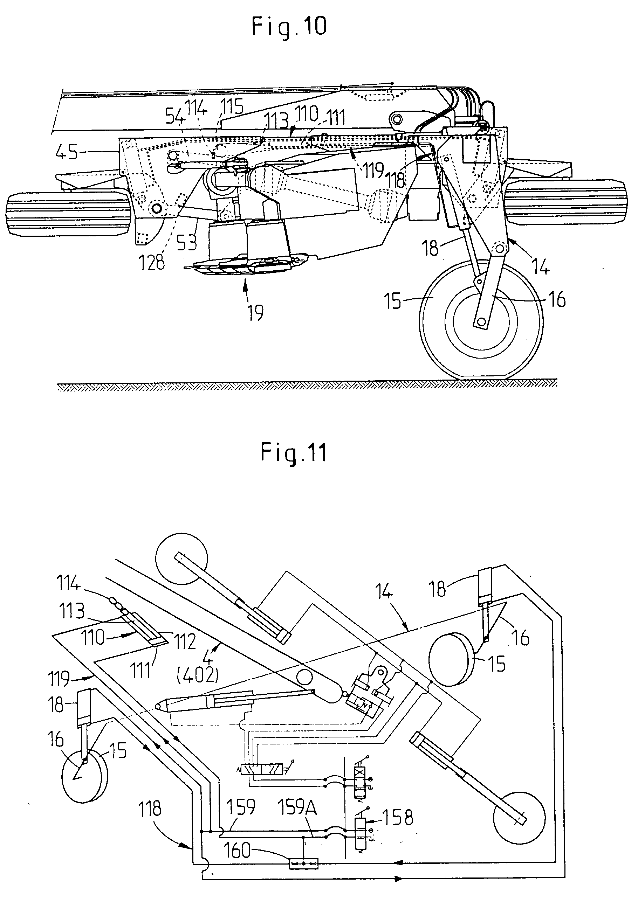

Les figures 10 à 17 visualisent la transformation de la faucheuse (1) pour l'amener de la position de travail (figure 8) dans laquelle elle est déplacée suivant la direction (12), dans la position de transport (figure 16) dans laquelle elle est déplacée suivant la direction (12 A).

La première phase de transformation apparaît sur les figures 10 et 11. En actionnant le deuxième distributeur (158) du tracteur (2), on alimente d'une part le circuit (118) des vérins (18) des roues de travail (15) et d'autre part le circuit (119) du vérin (111) du dispositif de relevage (110) du mécanisme de récolte (19). Ceci a pour effet de placer le châssis (14) et le mécanisme de récolte (19) en position haute. Dans cette position, le premier organe de suspension (53) est positionné contre la butée (128) que comporte la console avant (45).

La deuxième phase de la transformation apparaît sur les figures 12 et 13. On actionne tout d'abord le levier pivotant (182) de l'inverseur (171) au moyen de la cordelette (153) de telle sorte que l'inverseur (171) puisse distribuer l'huile aux circuits des vérins (136, 136 A) du dispositif de détection (120) et des vérins (127, 127 A) des roues de transport (121, 121 A). Tout en maintenant l'action sur le levier pivotant (182) de l'inverseur (171), on commande ensuite le premier distributeur (156) du tracteur (2) de telle sorte que le tracteur (2) alimente le vérin (136) du dispositif de détection (120) et la grande chambre des vérins (127, 127 A) des roues de transport (121, 121 A). Cette alimentation se fait au travers de la conduite (157 A) de l'inverseur (171), de la conduite (141) et des conduites (141 B, 141 D).

L'huile contenue dans le vérin (136 A) et dans la petite chambre des vérins (127, 127 A), quant à elle, retourne au tracteur (2) au travers des conduites (141 C, 141 E), de la conduite (141 A), de l'inverseur (171) et de la conduite (157). Ce faisant, le vérin (136) s'appuie sur la butée (137) correspondante de la console arrière (51) et fait pivoter le dispositif de détection (120) autour du boulon (135) de sorte que la came (140) ne puisse plus actionner le levier de commande (133) du distributeur (132) (figure 7). Parallèlement, les roues de transport (121, 121 A) descendent en pivotant autour de leur articulation respective (124, 125). L'alimentation s'arrête lorsque les bras de roue (122, 123) butent sur les butées (128, 128 A) respectives agencées sur la console avant (45), respectivement sur la console arrière (51). Dans cette position, la butée de maintien (129) est en contact avec le premier organe de suspension (53).

On relâche ensuite la cordelette (153) pour ne plus actionner le levier pivotant (182) de l'inverseur (171).

La troisième phase de la transformation apparaît sur les figures 14 et 15. L'utilisateur commande le deuxième distributeur (158) du tracteur (2) afin que ce dernier alimente la petite chambre des vérins (18) des roues de travail (15). Ce faisant, les roues de travail (15) montent et on fait reposer le poids du corps (3) de la faucheuse (1) sur les roues de transport (121, 121 A). Comme le circuit (119) du vérin (111) du dispositif de relevage (110) du mécanisme de récolte (19) est couplé en parallèle avec le circuit (118) des vérins (18) des roues de travail (15), ou alimente également la grande chambre du vérin (111) dont la tige (113) sort alors du cylindre (112). Le mécanisme de récolte (19) reste cependant en position haute étant donné que le premier organe de suspension (53) repose sur la butée de maintien (129) du bras de roue (122) de la roue de transport avant (121).

La dernière phase de la transformation apparaît sur les figures 16 et 17. Comme le dispositif de détection (120) est escamoté, c'est-à-dire que la came (140) ne peut plus actionner le levier de commande (133) du distributeur (132), ce dernier est passant. On peut dès lors faire passer le timon (4) de la position intermédiaire (402) dans la position extrême (403) de transport en le faisant complètement pivoter vers la gauche autour de l'axe géométrique (10) de l'articulation (9). Pour ce faire, on actionne le distributeur (156) de telle sorte que le tracteur (2) alimente la grande chambre du vérin de commande (13) du timon (4) au travers de la conduite (157) de l'inverseur (171), de la conduite (149), du distributeur (132) qui est ouvert, et de la conduite (149 A). L'huile contenue dans la petite chambre du vérin (13), quant à elle, retourne au tracteur (2) par la conduite (149 B), l'inverseur (171) et la conduite (157 A). La position extrême (403) est atteinte lorsque, par exemple, la tige du vérin (13) est sortie au maximum du cylindre dudit vérin (13).

Pour transformer la faucheuse (1) de la position de transport (403) dans une position de travail (401, 402), on fera les différentes opérations en sens inverse. Le dispositif de détection (120) sera à nouveau ramené dans sa position non escamotée en alimentant le vérin (136 A).

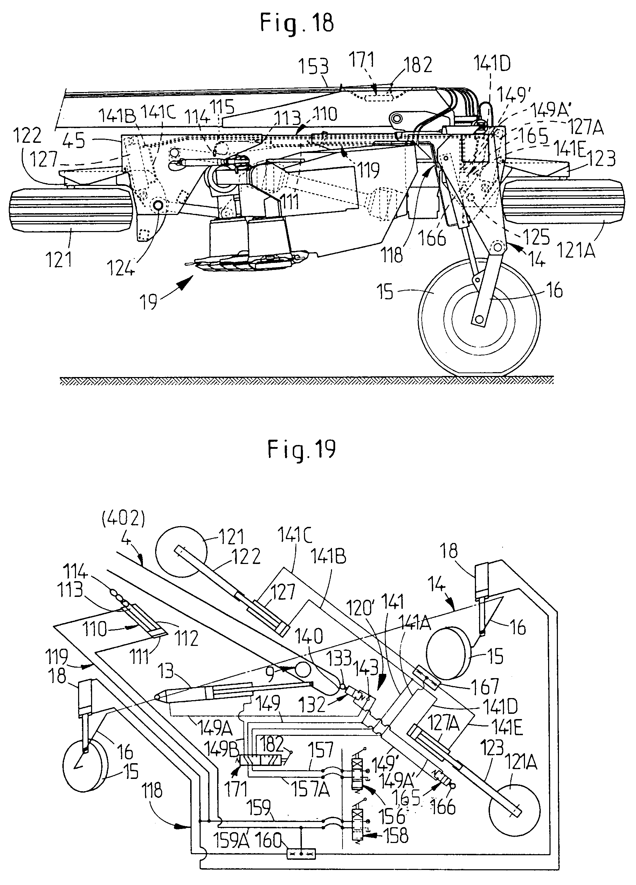

Sur les figures 18 et 19 est représenté un autre exemple de réalisation d'un dispositif de détection (120'). Ce dispositif de détection (120') comporte également un distributeur 2/2 (132) qui est cependant lié rigidement à la console arrière (51). Le dispositif de détection (120') comporte également un autre distributeur 2/2 (165) monté en parallèle, grâce à une paire de conduites (149', 149 A'), sur la paire de conduites (149, 149 A). Ce distributeur (165) est monté rigidement sur l'une des consoles (45, 51) (dans l'exemple représenté, la console arrière (51)) et est muni d'un levier de commande (166).

Le vérin (127) de la roue de transport avant (121) est alimenté par une paire de conduites (141 B, 141 C) et le vérin (127 A) de la roue de transport arrière (121 A) est alimenté par une paire de conduites (141 D, 141 E). Ces deux paires de conduites (141 B, 141 C, 141 D, 141 E) sont couplées en parallèle avec une paire de conduites (141, 141 A). Un diviseur de débit (167) est intégré dans ce circuit afin d'alimenter de manière identique les deux vérins (127, 127 A).

Tous les autres éléments sont identiques à l'exemple de réalisation précédent. Ni leur structure, ni leur fonction ne seront donc redécrites.

Dans cet exemple de réalisation, l'action du distributeur (132) est annulée lorsque l'une des roues de transport (121, 121 A) (dans l'exemple de réalisation, la roue de transport arrière (121 A)) arrive en bout de course de descente.

Lors de la deuxième phase de la transformation pour passer de la position intermédiaire de travail (402) dans la position de transport (403), on actionne tout d'abord le levier pivotant (182) de l'inverseur (171) au moyen de la cordelette (153) de telle sorte que l'inverseur (171) puisse distribuer l'huile aux deux paires de conduites (141 B, 141 C, 141 D, 141 E) des vérins (127, 127 A) des roues de transport (121, 121 A). Tout en maintenant l'action sur le levier pivotant (182) de l'inverseur (171), on commande ensuite le premier distributeur (156) du tracteur (2) de telle sorte que le tracteur (2) alimente la grande chambre des vérins (127, 127 A) des roues de transport (121, 121 A). Cette alimentation se fait au travers de la conduite (157 A), de l'inverseur (171), de la conduite (141) et des conduites (141 B, 141 D). L'huile contenue dans la petite chambre des vérins, (127, 127 A) quant a elle, retourne au tracteur (2) au travers des conduites (141 C, 141 E), du diviseur de débit (167), de la conduite (141 A), de l'inverseur (171) et de la conduite (157). En bout de course, le bras de roue (123) de la roue de transport arrière (121 A) actionne le levier de commande (166) du distributeur (165) le rendant de ce fait passant. On relâche ensuite la cordelette (153) pour ne plus actionner le levier pivotant (182) de l'inverseur (171).

Lors de la dernière phase de la transformation, on peut dès lors faire passer le timon (4) de la position intermédiaire (402) dans la position extrême (403) de transport en le faisant complètement pivoter vers la gauche autour de l'axe géométrique (10) de l'articulation (9) et ce bien que le distributeur (132) soit fermé au départ. Pour ce faire, on actionne le distributeur (156) du tracteur (2) de telle sorte que ledit tracteur (2) alimente la grande chambre du vérin de manoeuvre (13) du timon (4) au travers de la conduite (157), de l'inverseur (171), de la conduite (149), de la conduite (149'), du distributeur (165) qui est ouvert, de la conduite (149 A') et de la conduite (149 A). L'huile contenue dans la petite chambre du vérin (13), quant à elle, retourne au tracteur (2) par la conduite (149 B), de l'inverseur (171) et de la conduite (157 A).

Bien que cela n'ait pas été évoqué, il va de soi que l'inverseur (171) et les distributeurs (132, 165) retournent dans leur position neutre, c'est-à-dire en position "passant" pour le distributeur (132) et en position "fermé" pour le distributeur (165) lorsqu'ils ne sont pas actionnés et ce, de manière connue, au moyen d'un ressort intégré audit inverseur (171), respectivement auxdits distributeurs (132, 165).

Finalement, différentes modifications restent possibles notamment en ce qui concerne la constitution des divers éléments ou par substitution d'équivalents techniques, sans pour autant sortir du domaine de protection défini par les revendications.

## Revendications

1. Machine agricole (1) comportant un corps (3) et un moyen de liaison (4) à un véhicule moteur (2), lequel moyen de liaison (4) est lié au corps (3) par une articulation (9) d'axe (10) dirigé vers le haut et pouvant être amené dans deux positions extrêmes (401, 403), dont l'une est une position de travail (401) et l'autre la position de transport (403), et dans une position intermédiaire (402), qui est une autre position de travail, par pivotement autour dudit axe (10) sous l'action d'un organe de manoeuvre (13), ladite machine agricole (1) comportant en sus un dispositif de détection (120 ; 120') détectant la position intermédiaire de travail (402) du moyen de liaison (4) et stoppant l'action de l'organe de manoeuvre (13) lorsque ledit moyen de liaison (4) arrive de ladite position extrême de travail (401) dans la position intermédiaire de travail (402), l'action dudit dispositif de détection (120 ; 120') pouvant être annulée, de sorte que l'organe de manoeuvre (13) puisse amener le moyen de liaison (4) au-delà de la position intermédiaire de travail (402) dans la position de transport (403), caractérisée par le fait que :
a) le dispositif de détection (120 ; 120') coupe l'alimentation de l'organe de manoeuvre (13) lorsque ledit moyen de liaison (4) arrive de la position extrême de travail (401) dans la position intermédiaire de travail (402);
b) la machine agricole (1) comporte, d'une manière connue en soi, des roues de transport (121 ; 121A) pouvant être amenées d'une position escamotée dans une position de transport;
c) l'action dudit dispositif de détection (120 ; 120') est annulée automatiquement durant la phase de descente des roues de transport (121 ; 121A).

2. Machine agricole selon la revendication 1, caractérisée par le fait que le dispositif de détection (120 ; 120') est lié au corps (3).

3. Machine agricole selon la revendication 1 ou 2, caractérisée par le fait que le dispositif de détection (120) est lié au corps (3) au moyen d'une articulation (135).

4. Machine agricole selon l'une au moins des revendications 1 à 3, caractérisée par le fait qu'il est prévu un moyen d'escamotage (168) destiné à escamoter le dispositif de détection (120) et pouvant être actionné à partir du véhicule moteur (2).

5. Machine agricole selon la revendication 4, caractérisée par le fait que le moyen d'escamotage (168) est implanté sur le dispositif de détection (120).

6. Machine agricole selon la revendication 4 ou 5, caractérisée par le fait que le moyen d'escamotage (168) comporte au moins un vérin (136).

7. Machine agricole selon la revendication 5, caractérisée par le fait que le moyen d'escamotage (168) comporte deux vérins plongeurs (136, 136A) qui s'étendent au moins sensiblement sans jeu entre deux butées (137, 137A) solidaires du corps (3).

8. Machine agricole selon l'une au moins des revendications 3 à 7, caractérisée par le fait qu'un organe élastique (142) contribue, au moins partiellement, à maintenir le dispositif de détection (120) en position opérationnelle.

9. Machine agricole selon l'une au moins des revendications 1 à 8, caractérisée par le fait que le dispositif de détection (120 ; 120') comporte un organe de commande (133) pouvant occuper deux positions : une première position dans laquelle l'alimentation de l'organe de manoeuvre (13) est établie et une deuxième position dans laquelle l'alimentation de l'organe de manoeuvre (13) est coupée.

10. Machine agricole selon la revendication 9, caractérisée par le fait que le passage de l'organe de commande (133) de la première position à la deuxième position est réalisé par une came (140) agissant sur ledit organe de commande(133).

11. Machine agricole selon les revendications 2 et 10, caractérisée par le fait que la came (140) est liée directement ou indirectement au moyen de liaison (4).

12. Machine agricole selon l'une au moins des revendications 1 à 11, caractérisée par le fait que l'organe de manoeuvre (13) du moyen de liaison (4) est un vérin.

13. Machine agricole selon les revendications 11 et 12, caractérisée par le fait que la came (140) est solidaire dudit vérin (13).

14. Machine agricole selon la revendication 12 ou 13 et l'une au moins des revendications 9 à 11, caractérisée par le fait que l'organe de commande (133) commande un distributeur (132) implanté sur le dispositif de détection (120 ; 120').

15. Machine agricole selon la revendication 14, caractérisée par le fait que le distributeur (132) est un distributeur de type 2/2 muni en parallèle d'un clapet anti-retour (143).

16. Machine agricole selon la revendication 15 et l'une des revendications 6 ou 7, caractérisée par le fait que le circuit (149, 149A, 149B) du vérin de manoeuvre (13) du moyen de liaison (4) et le circuit (141) du vérin (136) ou le circuit (141, 141A) des vérins (136, 136A) du moyen d'escamotage (168) sont alimentés à partir d'un circuit commun (157, 157A), et qu'un inverseur (171) permet d'alimenter soit le circuit (149, 149A, 149B) du vérin de manoeuvre (13), soit le circuit (141) du vérin (136) ou le circuit (141, 141A) des vérins (136, 136A) du moyen d'escamotage (168).

17. Machine agricole selon l'une au moins des revendications 1 à 16, caractérisée par le fait que les roues (121, 121A), servant au transport, sont amenées dans leur position de transport et dans leur position escamotée par au moins un élément de manoeuvre (127, 127A) actionné à partir du véhicule moteur (2).

18. Machine agricole selon la revendication 17, caractérisée par le fait qu'à chaque roue (121, 121A) servant au transport, est associé un élément de manoeuvre (127, 127A).

19. Machine agricole selon la revendication 17 ou 18, caractérisée par le fait que l'élément de manoeuvre (127, 127A) est un vérin.

20. Machine agricole selon la revendication 19 et l'une au moins des revendications 6, 7 ou 16, caractérisée par le fait que le circuit (141) du vérin (136) ou le circuit (141, 141A) des vérins (136, 136A) du moyen d'escamotage (168) et le circuit (141B, 141C, 141D, 141E) du (des) vérin(s) de manoeuvre (127, 127A) des roues (121, 121A) servant au transport sont couplés en parallèle.

21. Machine agricole selon la revendication 15 non prise en combinaison avec les revendications 3 à 8, caractérisée par le fait qu'il est prévu un distributeur (165) de type 2/2 dont l'ouverture et la fermeture sont commandées par un organe de commande (166), et qui est branché en parallèle avec le distributeur 2/2 (132) du dispositif de détection (120').

22. Machine agricole selon la revendication 21, caractérisée par le fait que l'une au moins des roues (121, 121A) servant au transport agit, lorsqu'elle est amenée en position de transport, directement ou indirectement sur l'organe de commande (166) pour commander l'ouverture du distributeur (165).

23. Machine agricole selon la revendication 21 ou 22 et la revendication 19, caractérisée par le fait que le circuit (149, 149', 149A, 149A', 149B) du vérin de manoeuvre (13) du moyen de liaison (4) et le circuit (141B, 141C, 141D, 141E) du (des) vérin(s) de manoeuvre (127, 127A) des roues (121, 121A) servant au transport sont alimentés à partir d'un circuit commun (157, 157A), et qu'un inverseur (171) permet d'alimenter soit le circuit (149, 149', 149A, 149A', 149B) dudit vérin de manoeuvre (13) du moyen de liaison (4), soit le circuit (141B, 141C, 141D, 141E) dudit (desdits) vérin(s) de manoeuvre (127, 127A) des roues (121, 121A) servant au transport.

24. Machine agricole selon les revendications 19 et 23, caractérisée par le fait que le circuit (141B, 141C, 141D, 141E) des vérins de manoeuvre (127, 127A) des roues (121, 121A) servant au transport, comporte au moins un diviseur de débit (167).

25. Machine agricole selon l'une au moins des revendications 16, 23 ou 24, caractérisée par le fait que l'inverseur (171) est commandé à partir du véhicule moteur (2) par un organe de commande (155).

26. Machine agricole selon la revendication 25, caractérisée par le fait que l'inverseur (171) est un inverseur à levier pivotant (182) et que l'organe de commande (155) est constitué d'un organe de traction (153) lié audit levier pivotant (182) et manoeuvrable depuis le véhicule moteur (2).

27. Machine agricole selon l'une au moins des revendications 1 à 26, caractérisée par le fait que l'articulation (9) liant le moyen de liaison (4) au corps (3) s'étend, en vue de dessus, dans la partie médiane dudit corps (3) considéré transversalement à la direction d'avance (12) au travail, et que les deux positions de travail (401, 402) du moyen de liaison (4) sont au moins sensiblement symétriques par rapport à un plan vertical (11) dirigé suivant la direction d'avance (12) au travail et passant par l'axe (10) de ladite articulation (9).

28. Machine agricole selon l'une au moins des revendications 1 à 27, caractérisée par le fait que c'est une machine de récolte.

29. Machine agricole selon la revendication 28, caractérisée par le fait que la machine de récolte est une faucheuse avec ou sans organes de traitement du produit coupé.

## Claims

1. An agricultural machine (1) comprising a body (3) and a connecting means (4) to a motor vehicle (2), this connecting means (4) being connected to the body (3) by an articulation (9) whose axis (10) is directed upwardly, and being able to be brought into two extreme positions (401, 403), of which one is a working position (401) and the other the transport position (403), and into an intermediate position (402), which is another working position, by pivoting about the said axis (10) under the action of a manoeuvring element (13), the said agricultural machine (1) having in addition a detection device (120; 120') detecting the intermediate working position (402) of the connecting means (4) and stopping the action of the manoeuvring element (13) when the said connecting means (4) comes from the said extreme working position (401) into the intermediate working position (402), the action of the said detection device (120; 120') being able to be cancelled, in such a way that the manoeuvring element (13) can bring the connecting means (4) beyond the intermediate working position (402) into the transport position (403),
***characterised in that:***
a) the detection device (120; 120') cuts the supply of the manoeuvring element (13) when the said connection means (4) comes from the extreme working position (401) into the intermediate working position (402);
b) the agricultural machine (1) comprises, in a manner known in itself, transport wheels (121; 121A) being able to be brought from a retracted position into a transport position;
c) the action of the said detection device (120; 120') is automatically cancelled during the descent phase of the transport wheels (121; 121A).

2. An agricultural machine in accordance with claim 1, ***characterised in that*** the detection device (120; 120') is connected to the body (3).

3. An agricultural machine in accordance with claim 1 or 2, ***characterised in that*** the detection device (120) is connected to the body (4) by means of an articulation (135).

4. An agricultural machine in accordance with one at least of claims 1 to 3, ***characterised in that*** there is provided a retraction means (168) intended to retract the detection device (120) and being able to be activated from the motor vehicle (2).

5. An agricultural machine in accordance with claim 4, ***characterised in that*** the retraction means (168) is installed on the detection device (120).

6. An agricultural machine in accordance with claim 4 or 5, ***characterised in that*** the retraction means (168) comprises at least one jack (136).

7. An agricultural machine in accordance with claim 5, ***characterised in that*** the retraction means (168) comprises two plunger jacks (136, 136A) which extend at least approximately without play between two stops (137, 137A) solidly attached to the body (3).

8. An agricultural machine in accordance with one at least of claims 3 to 7, ***characterised in that*** an elastic element (142) contributes, at least partially, to maintaining the detection device (120) in an operational position.

9. An agricultural machine in accordance with one at least of claims 1 to 8, ***characterised in that*** the detection device (120; 120') comprises a control element (133) being able to occupy two positions: a first position in which the supply to the manoeuvring element (13) is established and a second position in which the supply to the manoeuvring element (13) is cut.

10. An agricultural machine in accordance with claim 9**, *characterised in that*** the passage of the control element (133) from the first position to the second position is achieved by a cam (140) acting on the said control element (133).

11. An agricultural machine in accordance with claims 2 and 10, ***characterised in that*** the cam (140) is connected directly or indirectly to the connecting means (4).

12. An agricultural machine in accordance with one at least of claims 1 to 11, ***characterised in that*** the manoeuvring element (13) of the connecting means (4) is a jack.

13. An agricultural machine in accordance with claims 11 and 12, ***characterised in that*** the cam (140) is solidly attached to the said jack (13).

14. An agricultural machine in accordance with claim 12 or 13 and one at least of claims 9 to 11, ***characterised in that*** the control element (133) controls a distributor (132) installed on the detection device (120; 120').

15. An agricultural machine in accordance with claim 14, ***characterised in that*** the distributor (132) is a distributor of the 2/2 type equipped in parallel with a non-return valve (143).

16. An agricultural machine in accordance with claim 15 and one of claims 6 or 7, ***characterised in that*** the circuit (149, 149A, 149B) of the manoeuvring jack (13) of the connecting means (4) and the circuit (141) of the jack (136) or the circuit (141, 141A) of the jacks (136, 136A) of the retraction means (168) are supplied from a common circuit (157, 157A), and in that an inverter (171) allows the supply of either the circuit (149, 149A, 149B) of the manoeuvring jack (13), or the circuit (141) of the jack (136) or the circuit (141, 141A) of the jacks (136, 136A) of the retraction means (168).

17. An agricultural machine in accordance with one at least of claims 1 to 16, ***characterised in that*** the wheels (121, 121A), serving for transport, are brought into their transport position and into their retracted position by at least one manoeuvring element (127, 127A) activated from the motor vehicle (2).

18. An agricultural machine in accordance with claim 17, ***characterised in that*** a manoeuvring element (127, 127A) is associated with each wheel (121, 121A) serving for transport.

19. An agricultural machine in accordance with claim 17 or 18, ***characterised in that*** the manoeuvring element (127, 127A) is a jack.

20. An agricultural machine in accordance with claim 19 and one at least of claims 6, 7 or 16, ***characterised in that*** the circuit (141) of the jack (136) or the circuit (141, 141A) of the jacks (136, 136A) of the retraction means (168) and the circuit (141B, 141C, 141D, 141E) of the manoeuvring jack(s) (127, 127A) of the wheels (121, 121A) serving for transport are coupled in parallel.

21. An agricultural machine in accordance with claim 15 not taken in combination with claims 3 to 8, ***characterised in that*** there is provided a distributor (165) of the 2/2 type whose opening and closing are controlled by a control element (166), and which is connected in parallel with the 2/2 distributor (132) of the detection device (120').

22. An agricultural machine in accordance with claim 21, ***characterised in that*** one at least of the wheels (121, 121A) serving for transport acts, when it is brought into the transport position, directly or indirectly on the control element (166) in order to control the opening of the distributor (165).

23. An agricultural machine in accordance with claim 21 or 22 and claim 19, ***characterised in that*** the circuit (149, 149', 149A, 149A', 149B) of the manoeuvring jack (13) of the connecting means (4) and the circuit (141B, 141C, 141D, 141E) of the manoeuvring jack(s) (127, 127A) of the wheels (121, 121A) serving for transport are supplied from a common circuit (157, 157A), and in that an inverter (171) permits the supply of either the circuit (149, 149', 149A, 149A', 149B) of the said manoeuvring jack (13) of the connecting means (4), or the circuit (141B, 141C, 141D, 141E) of the said manoeuvring jack(s) (127, 127A) of the wheels (121, 121A) serving for transport.

24. An agricultural machine in accordance with claims 19 and 23, ***characterised in that*** the circuit (141B, 141C, 141D, 141E) of the manoeuvring jacks (127, 127A) of the wheels (121, 121A) serving for transport, has at least one flow divider (167).

25. An agricultural machine in accordance with one at least of claims 16, 23 or 24, ***characterised in that*** the inverter (171) is controlled from the motor vehicle (2) by a control element (155).

26. An agricultural machine in accordance with claim 25, ***characterised in that*** the inverter (171) is an inverter with a pivoting arm (182) and in that the control element (155) is made up from a traction element (153) connected to the said pivoting arm (182) and manoeuvrable from the motor vehicle (2).

27. An agricultural machine in accordance with one at least of claims 1 to 26, ***characterised in that*** the articulation (9) connecting the connecting means (4) to the body (3) extends, when seen from above, in the middle part of the said body (3) considered transversely to the direction of advance (12) during work, and in that the two working positions (401, 402) of the connecting means (4) are at least approximately symmetrical in relation to a vertical plane (11) directed along the direction of advance (12) during work and passing through the axis (10) of the said articulation (9).

28. An agricultural machine in accordance with one at least of claims 1 to 27, ***characterised in that*** it is a harvesting machine.

29. An agricultural machine in accordance with claim 28, ***characterised in that*** the harvesting machine is a mower with or without elements for treating the cut product.

## Patentansprüche

1. Landwirtschaftliche Maschine (1), die einen Körper (3) und ein Mittel (4) zur Verbindung mit einem Motorfahrzeug (2) umfaßt' welches Verbindungsmittel (4) mit dem Körper (3) durch ein Gelenk (9) mit einer nach oben gerichteten Achse (10) verbunden ist und in zwei Extremstellungen (401, 403), wovon die eine eine Arbeitsstellung (401) und die andere die Transportstellung (403) ist, und in eine Zwischenstellung (402), die eine andere Arbeitsstellung ist, durch Verschwenken um diese Achse (10) unter der Wirkung eines Betätigungsorgans (13) gebracht werden kann, welche landwirtschaftliche Maschine (1) noch eine Detektoreinrichtung (120; 120') umfaßt, die die Arbeitszwischenstellung (402) des Verbindungsmittels (4) ermittelt und die Wirkung des Betätigungsorgans (13) stoppt, wenn das Verbindungsmittel (4), von der äußersten Arbeitsstellung (401) aus, die Arbeitszwischenstellung (402) erreicht, wobei die Wirkung der Detektoreinrichtung (120; 120') derart ausgeschaltet werden kann, daß das Betätigungsorgan (13) das Verbindungsmittel (4) über die Arbeitszwischenstellung (402) hinaus in die Transportstellung (403) verstellen kann, ***dadurch gekennzeichnet,*** daß:
a) die Detektoreinrichtung (120; 120') die Speisung des Betätigungsorgans (13) unterbricht, wenn das Verbindungsmittel (4), von der äußersten Arbeitsstellung (402) aus, die Arbeitszwischenstellung erreicht;
b) die landwirtschaftliche Maschine (1), in an sich bekannter Weise, Transporträder (121; 121A) umfaßt, die von einer zurückgezogenen Stellung in eine Transportstellung gebracht werden können;
c) die Wirkung der Detektoreinrichtung (120; 120') automatisch während der Absenkphase der Transporträder (121; 121A) ausgeschaltet wird.

2. Landwirtschaftliche Maschine nach Anspruch 1*, **dadurch gekennzeichnet,*** daß die Detektoreinrichtung (120; 120') mit dem Körper (3) verbunden ist.

3. Landwirtschaftliche Maschine nach Anspruch 1 oder 2, ***dadurch gekennzeichnet,*** daß die Detektoreinrichtung (120) mit dem Körper (3) mittels eines Gelenks (135) verbunden ist.

4. Landwirtschaftliche Maschine nach mindestens einem der Ansprüche 1 bis 3, ***dadurch gekennzeichnet,*** daß ein Zurückziehmittel (168) vorgesehen ist, das dazu bestimmt ist, die Detektoreinrichtung (120) zurückzuziehen, und das vom Motorfahrzeug (2) aus betätigt werden kann.

5. Landwirtschaftliche Maschine nach Anspruch 4, ***dadurch gekennzeichnet,*** daß das Zurückziehmittel (168) auf der Detektoreinrichtung (120) angeordnet ist.

6. Landwirtschaftliche Maschine nach Anspruch 4 oder 5, ***dadurch gekennzeichnet,*** daß das Zurückziehmittel (168) mindestens einen Zylinder (136) umfaßt.

7. Landwirtschaftliche Maschine nach Anspruch 5, ***dadurch gekennzeichnet,*** daß das Zurückziehmittel (168) zwei Tauchkolben (136; 136A) umfaßt' die sich zumindest im wesentlichen ohne Spiel zwischen zwei, mit dem Körper (3) fest verbundenen Anschlägen (137, 137A) erstrecken.

8. Landwirtschaftliche Maschine nach mindestens einem der Ansprüche 3 bis 7, ***dadurch gekennzeichnet,*** daß ein elastisches Organ (142), zumindest teilweise, beiträgt, die Detektoreinrichtung (120) in Arbeitsstellung zu halten.

9. Landwirtschaftliche Maschine nach mindestens einem der Ansprüche 1 bis 8, ***dadurch gekennzeichnet,*** daß die Detektoreinrichtung (120; 120') ein Steuerorgan (133) umfaßt, das zwei Stellungen einnehmen kann: eine erste Stellung, in welcher die Speisung des Betätigungsorgans (13) erfolgt, und eine zweite Stellung, in welcher die Speisung des Betätigungsorgans (13) unterbrochen wird.

10. Landwirtschaftliche Maschine nach Anspruch 9, ***dadurch gekennzeichnet,*** daß der Übergang des Steuerorgans (133) von der ersten Stellung in die zweite Stellung durch einen Nocken (140) erfolgt, der auf das Steuerorgan (133) wirkt.

11. Landwirtschaftliche Maschine nach den Ansprüchen 2 und 10, ***dadurch gekennzeichnet,*** daß der Nocken (140) direkt oder indirekt mit dem Verbindungsmittel (4) verbunden ist.

12. Landwirtschaftliche Maschine nach mindestens einem der Ansprüche 1 bis 11, ***dadurch gekennzeichnet,*** daß das Betätigungsorgan (13) des Verbindungsmittels (4) ein Zylinder ist.

13. Landwirtschaftliche Maschine nach den Ansprüchen 11 und 12, ***dadurch gekennzeichnet,*** daß der Nocken (140) mit dem Zylinder (13) fest verbunden ist.

14. Landwirtschaftliche Maschine nach Anspruch 12 oder 13 und mindestens einem der Ansprüche 9 bis 11, ***dadurch gekennzeichnet,*** daß das Steuerorgan (133) einen Verteiler (132) steuert, der auf der Detektoreinrichtung (120; 120') angeordnet ist.

15. Landwirtschaftliche Maschine nach Anspruch 14, ***dadurch gekennzeichnet,*** daß der Verteiler (132) ein 2-2 Wegeventil ist, das parallel mit einer Rückschlagklappe (143) versehen ist.

16. Landwirtschaftliche Maschine nach Anspruch 15 und einem der Ansprüche 6 oder 7, ***dadurch gekennzeichnet,*** daß der Leitungskreis (149, 149A, 149B) des Betätigungszylinders (13) des Verbindungsmittels (4) und der Leitungskreis (141) des Zylinders (136) oder der Leitungskreis (141, 141A) der Zylinder (136, 136A) des Zurückziehmittels (168) von einem gemeinsamen Leitungskreis (157, 157A) gespeist werden und daß ein Umschalter (171) entweder die Speisung des Leitungskreises (149, 149A, 149B) des Betätigungszylinders (13) oder des Leitungskreises (141) des Zylinders (136) oder des Leitungskreises (141, 141A) der Zylinder (136, 136A) des Zurückziehmittels (168) gestattet.

17. Landwirtschaftliche Maschine nach mindestens einem der Ansprüche 1 bis 16, ***dadurch gekennzeichnet,*** daß die Räder (121, 121A), die zum Transport dienen, in ihre Transportstellung und in ihre zurückgezogene Stellung durch mindestens ein Betätigungselement (127, 127A), das vom Motorfahrzeug (2) aus betätigt wird, gebracht werden.

18. Landwirtschaftliche Maschine nach Anspruch 17, ***dadurch gekennzeichnet,*** daß jedem zum Transport dienenden Rad (121, 121A) ein Betätigungselement (127, 127A) zugeordnet ist.

19. Landwirtschaftliche Maschine nach Anspruch 17 oder 18, ***dadurch gekennzeichnet,*** daß das Betätigungselement (127, 127A) ein Zylinder ist.

20. Landwirtschaftliche Maschine nach Anspruch 19 und mindestens einem der Ansprüche 6, 7 oder 16, ***dadurch gekennzeichnet,*** daß der Leitungskreis (141) des Zylinders (136) oder der Leitungskreis (141, 141A) der Zylinder (136, 136A) des Zurückziehmittels (168) und der Leitungskreis (141B, 141C, 141D, 141E) des (der) Betätigungszylinders (Betätigungszylinder) (127, 127A) der zum Transport dienenden Räder (121, 121A) parallel geschaltet sind.

21. Landwirtschaftliche Maschine nach Anspruch 15, nicht in Kombination mit den Ansprüchen 3 bis 8, ***dadurch gekennzeichnet,*** daß ein 2-2 Wegeventil (165) vorgesehen ist, dessen Öffnung und Schließung durch ein Steuerorgan (166) gesteuert werden, und das mit dem 2-2 Wegeventil (132) der Detektoreinrichtung (120') parallel geschaltet ist.

22. Landwirtschaftliche Maschine nach Anspruch 21, ***dadurch gekennzeichnet,*** daß mindestens eines der zum Transport dienenden Räder (121, 121A), wenn es in die Transportstellung gebracht wird, direkt oder indirekt auf das Steuerorgan (166) wirkt, um die Öffnung des Wegeventils (165) zu steuern.

23. Landwirtschaftliche Maschine nach Anspruch 21 oder 22 und Anspruch 19, ***dadurch gekennzeichnet,*** daß der Leitungskreis (149, 149', 149A, 149A', 149B) des Betätigungszylinders (13) des Verbindungsmittels (4) und der Leitungskreis (141B, 141C, 141D, 141E) des (der) Betätigungszylinders (Betätigungszylinder) (127, 127A) der zum Transport dienenden Räder (121, 121A) von einem gemeinsamen Leitungskreis (157, 157A) gespeist werden und daß ein Umschalter (171) entweder die Speisung des Leitungskreises (149, 149', 149A, 149A', 149B) des Betätigungszylinders (13) des Verbindungsmittels (4) oder des Leitungskreises (141B, 141C, 141D, 141E) des (der) Betätigungszylinders (Betätigungszylinder) (127, 127A) der zum Transport dienenden Räder (121, 121A) gestattet.

24. Landwirtschaftliche Maschine nach den Ansprüchen 19 und 23, ***dadurch gekennzeichnet,*** daß der Leitungskreis (141B, 141C, 141D, 141E) der Betätigungszylinder (127, 127A) der zum Transport dienenden Räder (121, 121A) mindestens einen Durchflußteiler (167) umfaßt.

25. Landwirtschaftliche Maschine nach mindestens einem der Ansprüche 16, 23 oder 24*,* ***dadurch gekennzeichnet,*** daß der Umschalter (171) vom Motorfahrzeug (2) aus durch ein Steuerorgan (155) gesteuert wird.

26. Landwirtschaftliche Maschine nach Anspruch 25, ***dadurch gekennzeichnet,*** daß der Umschalter (171) ein Umschalter mit einem Schwenkhebel (182) ist und daß das Steuerorgan (155) aus einem Zugorgan (153) besteht, das mit dem Schwenkhebel (182) verbunden ist und vom Motorfahrzeug (2) aus betätigbar ist.

27. Landwirtschaftliche Maschine nach mindestens einem der Ansprüche 1 bis 26, ***dadurch gekennzeichnet,*** daß das Gelenk (9), das das Verbindungsmittel (4) mit dem Körper (3) verbindet, sich, von oben gesehen, im Mittelteil des Körpers (3), gesehen quer zur Arbeitsvorschubrichtung (12), erstreckt und daß die zwei Arbeitsstellungen (401, 402) des Verbindungsmittels (4) zumindest im wesentlichen symmetrisch zu einer Vertikalebene (11) sind, die in die Arbeitsvorschubrichtung (12) gerichtet ist und durch die Achse (10) des Gelenks (9) verläuft.

28. Landwirtschaftliche Maschine nach mindestens einem der Ansprüche 1 bis 27, ***dadurch gekennzeichnet,*** daß sie eine Erntemaschine ist.

29. Landwirtschaftliche Maschine nach Anspruch 28, dadurch gekennzeichnet, daß die Erntemaschine eine Mähmaschine mit oder ohne Behandlungsorgane(n) für das Schnittgut ist.
